# EUROPEAN PATENT APPLICATION

(11) **EP 1 416 478 A2**
(43) Date of publication of application: **06.05.2004**
(21) Application number: 03256655.6
(22) Date of filing: 22.10.2003
(51) Int. Cl.: G11B 7/007, G11B 7/24

(54) **Multilayer type of information recording medium and information recording and reproducing apparatus using same**

(30) Priority: 30.10.2002 JP 2002316057
(71) Applicant: Pioneer Corporation, Tokyo-to (JP)
(72) Inventor: Ogasawara, Masakazu, Tsurugashima-shi Saitama-ken (JP)
(74) Representative: Haley, Stephen

(57) **Abstract**

A multilayer type of information recording medium (e.g., optical disk; DK1, DK2) is provided. The medium is provided therein a plurality of information recording layers (L1 to L4) and a single corresponding-information recording layer (L1) into which information corresponding to information recorded in the information recording layers is recordable. The corresponding information is for example control information for controlling recording or reproduction of the information. The corresponding-information recording layer is provided with a reflection layer (RF1) to reflect an optical beam (B) radiated to optically read the corresponding information. A distance from a beam-incidence-side surface of the medium to the corresponding-information recording layer is the same as that in a monolayer type of information recording medium. An information recording and reproducing apparatus (SP) used, in a selective way, for the multilayer type and monolayer type of information recording mediums is provided as well.

## Description

The present invention relates to a multilayer type of information recording medium and an information recording and reproducing apparatus using the multilayer type of information recording medium.

### (Description of the Related Art)

In recent years, in the filed of optical disks, there has been a demand for increasing the memory capacity of a single optical disk. One approach to meet such a demand is to form a plurality of information recording layers into a single optical disk.

Practically, this multilayer type of optical disk is formed such that a plurality of information recording layers, each having a recording layer in which bits of information are recorded and a reflection layer placed to reflect a light beam radiated to the recording layer, are laminated one on the other to form a single optical disk.

It is also general that an optical disk is structured to have three areas consisting of a lead-in area, a user data area, and a lead-out area. The lead-in area is located at an innermost position on the disk and is used to have various types of control information recorded therein. The control information should be detected before recording or reproduction of bits of information into or from the information recording layer. In the user data area, which is next to the lead-in area in the radially outward direction of the disk, the foregoing information recording layer is formed. The lead-out area is located at an outermost position on the disk and is used to have various types of control information recorded therein. Such information should be detected when recording or reproducing information in or from the user data area is ended.

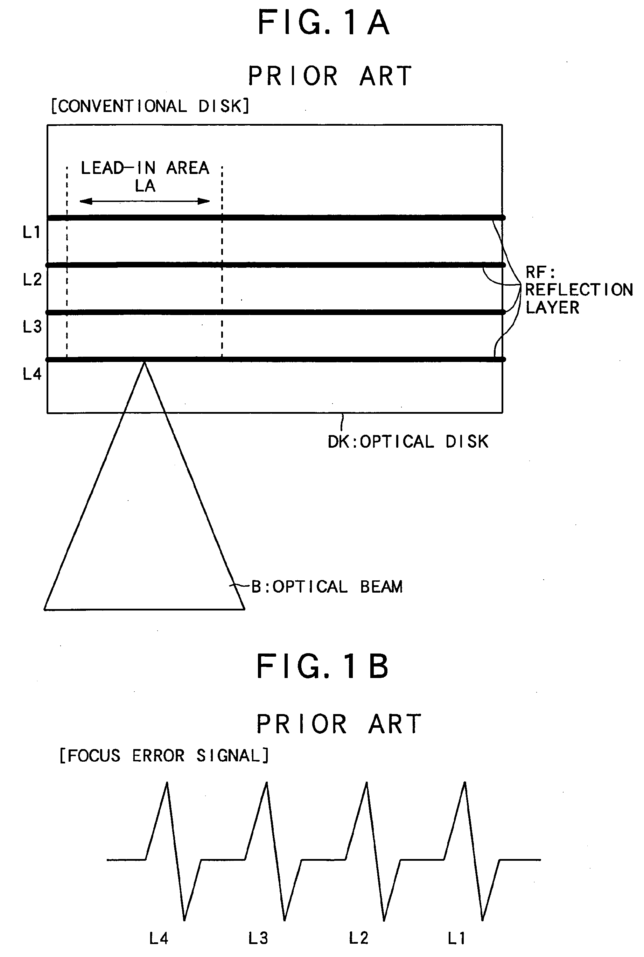

Fig. 1A shows a conventional multilayer type of optical disk, in which a plurality of lead-in areas are formed as control information recording layers so as to face the foregoing plural information recording layers one by one.

When detecting control information recorded in the lead-in areas conventionally produced as shown in Fig. 1A, an optical beam is first focused onto the nearest control information recording layer to an optical pickup radiating the optical beam, and then the focus is jumped from the initial focused layer to another in turn, thus finally reaching a desired control information recording layer in which desired necessary information is recorded. As shown in Japanese Patent Laid-open (KOKAI) publication No. 10-289450, the above way allows such necessary information including control information to be detected.

However, because the plural control information recording layers are formed in the lead-in area, it should be necessary to strike a balance between the reflection and the transmission of an optical beam at each control information recording layer. As a result, a signal, which is called focus error signal, which can be detected in response to the radiation of an optical beam onto each control information recording layer, is reduced in its signal level. Further, as shown in Fig. 1B, it is necessary in most cases to detect one or more similar focus error signals before reaching a control information recording layer to be targeted. These two unfavorable factors frequently lead to the problem that it is impossible to reach, with precision, a control information recording layer to be targeted.

In addition, when a control information recording layer to be targeted is farther than the nearest one to the optical pickup, it takes a longer period of time until focusing the optical beam is carried out onto the targeted layer, because it is necessary to repeat sequentially the focusing from the nearest one to the targeted layer and to correct a spherical aberration at each layer. That is, a useless waiting time becomes longer, whereby it takes a longer time when performing various operations such as initialization of the optical pickup. This reduces efficiency in information recording or reproducing operations.

A first object of the present invention is to provide, with due consideration to the difficulties of the above conventional technique, a multilayer type information recoding medium which allows an optical pickup to not only reach a control information recording layer to be targeted of the medium in a precise and quick manner but also detect necessary information including control information.

A second object of the present invention is to provide an information recording and reproducing apparatus having an optical pickup that is able to radiate an optical beam toward the above multilayer type information recoding medium to precisely and quickly a control information recording layer to be targeted of the medium and detects from the targeted layer necessary information including control information.

In order to realize the first object, according to one aspect of the present invention, there is provided a multilayer type of information recording medium comprising: a plurality of information recording layers into each of which information is recordable; and a single corresponding-information recording layer into which information corresponding to the information recorded in the information recording layers is recordable.

By way of example, the corresponding information is control information for controlling either recording or reproduction of the information into and from each of the information recording layers.

Preferably, the corresponding-information recording layer is provided with a reflection layer to reflect an optical beam radiated to optically read the corresponding information. In this case, it is preferred a distance from a beam-incidence-side surface of the medium to the corresponding-information recording layer is the same as a distance from a beam-incidence-side surface of a monolayer type of information recording medium provided with a single information recording layer for recording the information to the single information recording layer.

It is still preferred that the multilayer type of information recording medium further comprises a plurality of adjustment layers located between the single corresponding-information recording layer and the plurality of information recording layers and located continuously to the plurality of information recording layers, respectively, with the same level between each adjustment layer and the information recording layer kept.

In order to realize the second object, as one aspect of the present invention, there is an information recording and reproducing apparatus for selectively recording or reproducing information into or from an information recording layer consisting of either a signal information recording layer of a monolayer type of information recording medium or one of a plurality of information recording layers of a multilayer type of information recording medium, the apparatus comprising: a first setting device configured to initialize operating parameters to be appropriate for either the recording or reproduction of the information into or from the information recording layer of the monolayer type of information recording medium; a determination device configured to determine whether or not an information recording medium loaded currently in the information recording and reproducing apparatus is the monolayer type of information recording medium or the multilayer type of information recording medium, the determination being carried out after the initialization of the operating parameters; a first recording/ reproducing device configured to start recording or reproducing the information into or from the information recording layer of the monolayer type of information recording medium on the basis of the initialized operating parameters, when the determination device determines that the currently loaded information recording medium is the monolayer type of information recording medium; a second setting device configured to change the operating parameters to be appropriate for either the recording or reproduction of the information into or from the information recording layer of the multilayer type of information recording medium, when the determination device determines that the currently loaded information recording medium is the multilayer type of information recording medium; and a second recording/reproducing device configured to start recording or reproducing the information into or from the information recording layer of the multilayer type of information recording medium on the basis of the changed operating parameters.

To realize the second object, there is provided another aspect of the present invention, which is an information recording and reproducing method for selectively recording or reproducing information into or from an information recording layer consisting of either a signal information recording layer of a monolayer type of information recording medium or one of a plurality of information recording layers of a multilayer type of information recording medium, the method comprising the steps of: initializing operating parameters to be appropriate for either the recording or reproduction of the information into or from the information recording layer of the monolayer type of information recording medium; determining whether or not an information recording medium loaded currently is the monolayer type of information recording medium or the multilayer type of information recording medium, the determination being carried out after the initialization of the operating parameters; first starting recording or reproducing the information into or from the information recording layer of the monolayer type of information recording medium on the basis of the initialized operating parameters, when it is determined that the currently loaded information recording medium is the monolayer type of information recording medium; changing the operating parameters to be appropriate for either the recording or reproduction of the information into or from the information recording layer of the multilayer type of information recording medium, when it is determined that the currently loaded information recording medium is the multilayer type of information recording medium; and second starting recording or reproducing the information into or from the information recording layer of the multilayer type of information recording medium on the basis of the changed operating parameters.

To realize the second object, there is provided further aspect of the present invention, which is a program enabling a computer to function for selectively recording or reproducing information into or from an information recording layer consisting of either a signal information recording layer of a monolayer type of information recording medium or one of a plurality of information recording layers of a multilayer type of information recording medium, the computer providing the functions of: initializing operating parameters to be appropriate for either the recording or reproduction of the information into or from the information recording layer of the monolayer type of information recording medium; determining whether or not an information recording medium loaded currently is the monolayer type of information recording medium or the multilayer type of information recording medium, the determination being carried out after the initialization of the operating parameters; first starting recording or reproducing the information into or from the information recording layer of the monolayer type of information recording medium on the basis of the initialized operating parameters, when it is determined that the currently loaded information recording medium is the monolayer type of information recording medium; changing the operating parameters to be appropriate for either the recording or reproduction of the information into or from the information recording layer of the multilayer type of information recording medium, when it is determined that the currently loaded information recording medium is the multilayer type of information recording medium; and second starting recording or reproducing the information into or from the information recording layer of the multilayer type of information recording medium on the basis of the changed operating parameters.

Other objects and aspects of the present invention will become apparent from the following description of embodiments with reference to the accompanying drawings in which:
Figs. 1A and 1B are illustrations explaining a conventional problem;
Fig. 2 is a plan view showing an optical disk according to an embodiment of the information recording medium of the present invention;
Figs. 3A shows a section of a user data area of the optical disk in the radial direction thereof;
Fig. 3B shows a section of each information recording layer of the optical disk in the radial direction thereof;
Fig. 4A shows a sectional structure of the optical disk according to a first embodiment of the present invention;
Fig. 4B illustrates a focus error signal detected by an optical pick up in the first embodiment;
Fig. 5 is a block diagram outlining the configuration of an information recording and reproducing apparatus according to the first embodiment of the present invention;
Fig. 6 is a flowchart showing a focusing servo operation of the information recording and reproducing apparatus according to the first embodiment; and
Fig. 7 shows a sectional structure of an optical disk according to a second embodiment of the present invention.

Preferred embodiments of the present invention will now be described hereinafter with reference to the accompanying drawings.

In the following embodiments, the information recording medium of the present invention is reduced into practice a single-sided 4-layer optical disk that serves as a high-density DVD (Digital Versatile Disc). This DVD corresponds to a multilayer type of information recording medium, which is one type of the information recording medium according to the present invention.

### (First embodiment)

A first embodiment will now be described.

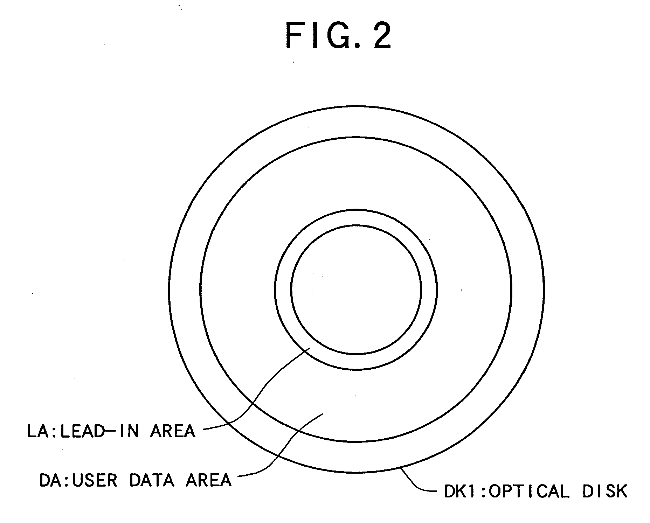

First of all, referring to Fig. 2, the structure of the optical disk according to the present embodiment will now be described. Fig. 2 shows a plan view of an optical disk DK1 employed by the present embodiment.

As shown in Fig. 2, the optical disk DK1 has at least two areas consisting of a lead-in area LA and a user data area DA, which are located in turn in the radially outward direction of the disk.

Recorded in the lead-in area LA are pieces of information that should be read out before starting reproducing information recorded in the user data area DA. Such pieces of information recorded in the lead-in area LA includes information about the disk DK1, information necessary for deciding the intensity of an optical beam for the information reproduction to be carried out from now on, and information about a start address in the user data area DA.

Recorded in the user data area DA are pieces of information that are actually reproduced.

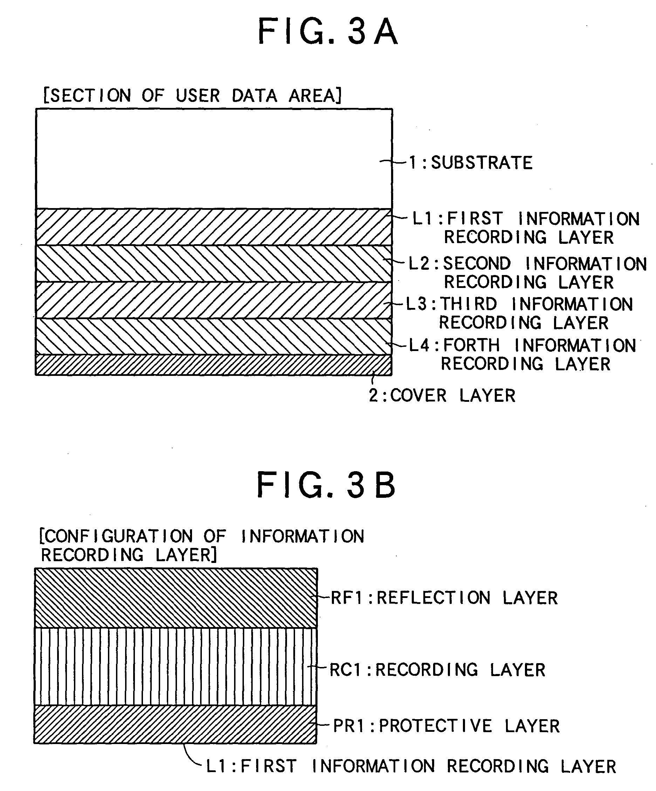

Referring to Figs. 3A and 3B, the sectional structure of the user data area DA of the optical disk DK1 will now be described. Figs. 3A and 3B show sections in the radial direction of the optical disk DK1.

As shown in Fig. 3A, the optical disk DK1 is structured into a multilayer type of disk with four information recording layers, which has a substrate 1, a first information recording layer L1, a second information recording layer L2, a third information recording layer L3, a fourth information recording layer L4 (the first to fourth information recording layers L1 to L4 serve as information recording layers), and a cover layer 2, which are mutually laminated in this order.

Each of the first to fourth information recording layers L1 to L4 is, as shown in Fig. 3B, is composed of a reflection layer RF1, a recording layer RC 1, and a protective layer PR1, which are mutually laminated in this order.

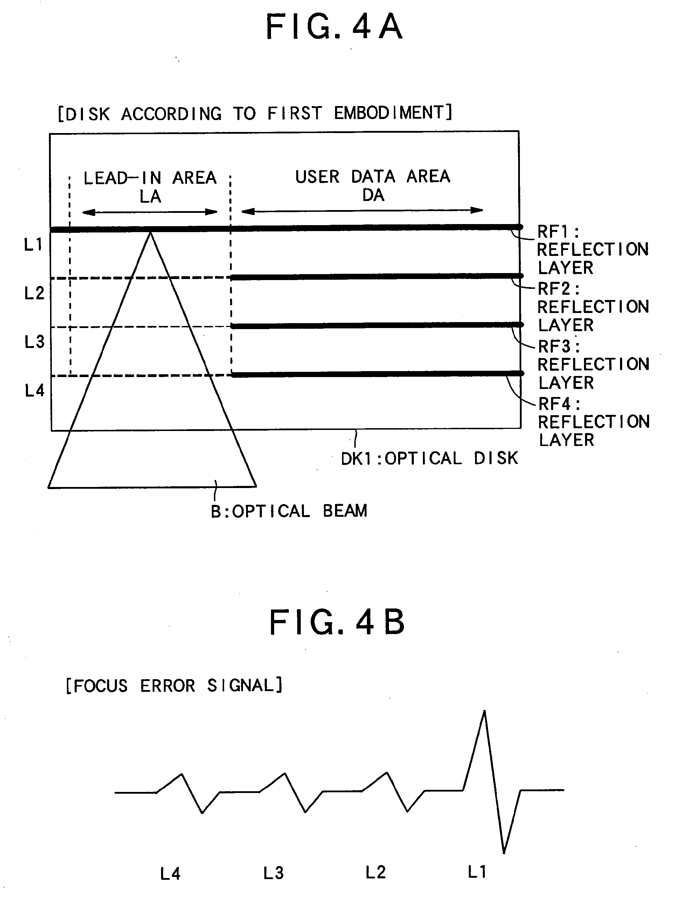

Specifically, the surface of the substrate 1 is laminated with the reflection layer RF1 of the first information recording layer L1. The reflection layer RF1 is able to reflect an optical beam B (refer to Fig. 4A) coming in through the cover layer 2. The optical beam B is radiated by an optical pickup.

The surface of reflection layer RF1 is laminated with the recording layer RC1, as shown in Fig. 3B, to hold bits of information recorded therein, so that the optical disk DK1 has information recorded therein. A material of the recording layer RC1 is for example cyanine organic dye.

Further, the surface of the recording layer RC1 is laminated with the protective layer PR1 that is responsible for protecting the recording layer RC1 from various external factors, such as moisture in the air and fluctuations in the outside temperature.

Further, on the protective layer PR1, that is, the first information recording layer L1, the second to fourth information recording layers L2 to L4, which has the identical layer configuration as that of the first information recording layer L1, are mutually laminated in sequence, as illustrated in Fig. 3A. Finally, the surface of the protective layer (not shown in Fig. 3A) of the fourth information recording layer L4 is laminated with the cover layer 2 to cover the entire layers.

Although not shown, an intermediate layer is formed between information recording layers. The cover layer 2, the protective layer PR, and the intermediate layer (not shown) are made from a material that is transparent to an optical beam B to be radiated.

On the other hand, the lead-in area LA is also structured into layers, so that the layer structure thereof will now be explained in connection with Figs. 4A and 4B.

In the case of the lead-in area LA, as shown in Fig. 4A, the reflection layer RF1 is provided with only the first information recording layer L1, so that this layer functions as a corresponding information recording layer and has the sectional structure that has already been explained in Fig. 3B. By contrast, each of the remaining information recording layers L2 and L4 has no reflection layer.

Therefore, this configuration makes it possible that a later-described information recording and reproducing apparatus carries out more quickly a focusing servo operation in the lead-in area.

In addition, the distance from the disk (DS1) surface, through which the radiated optical beam B comes into the disk, to the information recording layer L1 with the reflection layer in the lead-in area is designed so that the distance is equal to that of a monolayer type of optical disk in which one information recording layer is formed alone (that is, a distance from the surface, through which the optical beam B comes into the disk, to the only one information recording layer). Practically, such distance is 100 µm, which is specified as a distance from the optical beam incidence-side surface to the only one information recording layer in the monolayer disk categorized into the high-density DVD.

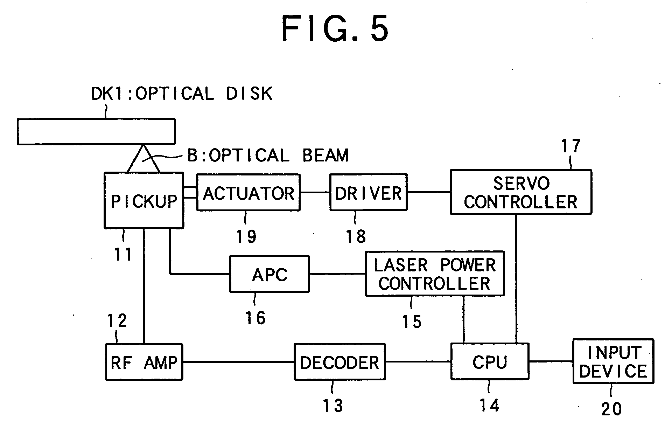

Referring to Fig. 5, an information recording and reproducing apparatus that can be used for recording and reproducing information in or from a multilayer type of disk (including the foregoing optical disk DK) and a monolayer type of disk. Fig. 5 is a block diagram outlining the entire configuration of the information recording and reproducing apparatus.

As shown in Fig. 5, the information recording and reproducing apparatus SP is provided with an optical pickup 11 serving as first and second recording and reproducing means, RF amplifier 12, decoder 13, CPU 14 serving as first and second setting means and determining means, laser power controller 15, automatic power control (APC) circuit 16, servo controller 17, driver 18, actuator 19, and input device 20.

The optical pickup 11 is configured to radiate an optical beam B toward, for example, the optical disk DK1 and receive reflection light of the beam B from the optical disk DK1 to convert the received reflection light into a corresponding electrical signal. For performing such radiation and reception, the optical pickup 11 has an objective lens to focus the optical beam B onto any of the information recording layers in the optical disk DK1 and lens such as cylindrical collimator lens to give an astigmatism value to the reflection light from the optical disk DK1.

The RF amplifier 12 receives the electrical signal from the optical pickup 11 and uses it to produce an RF signal indicative of information to be reproduced, a focus error signal, a tracking error signal, and a front monitor signal, with the produced signals then amplified.

The decoder 13 is configured to decode the amplified RF signal for producing a reproduction signal indicative of information that has been recorded, before outputting the reproduction signal.

Using the detected focus error signal and the tracking error signal, the CPU 14 is, as part of its functions, responsible for controlling the focusing and tracking operations through communication of control signals to and from the servo controller 17.

In addition, for controlling the power (laser power) of the optical beam B, the CPU 14 is able to communicate a control signal to and from the laser power controller 15 using the front monitor signal.

The servo controller 17 is configured to produce a focus drive signal and a tracking drive signal so that those signals are supplied to the driver 18.

Further, the laser power controller 15 is designed to produce a laser power signal and give its laser power signal to the APC 16, so that the APC 16 adjusts the laser power of the optical beam B. To be specific, the APC 16 generates a control signal to gain the front monitor signal equal to a reference level. The control carried out using the control signal is as follows. When the front monitor signal is lower in its amplitude than the reference level, the level of a drive signal to a not-shown laser element in the optical pickup 11 is raised. In contrast, when the amplitude of the front monitor signal is equal to or higher than the reference level, the drive signal to the laser element is lowered in its level.

The actuator 19 is driven by a drive signal produced by the servo controller 17 and amplified by the driver 18. Thus, responsively to the drive signal, the actuator 19 moves the objective lens incorporated in the optical pickup 11, in the vertical and horizontal directions to the information recording layers of the optical disk DK1, so that the focus servo and tracking servo operations of the optical beam B are carried out.

The input device 20 allows a user to give necessary information to the CPU 14.

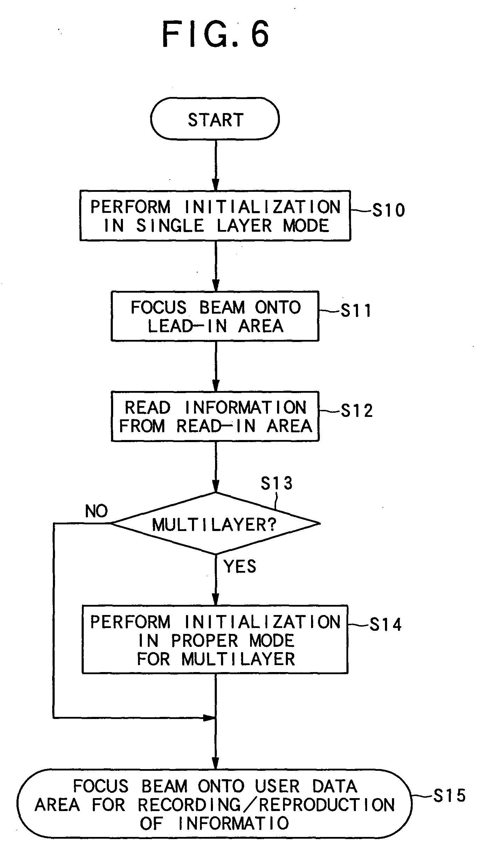

Using the flowchart shown in Fig. 6, the operation for reading pieces of information from the lead-in area LA of the optical disk DK1 will now be described.

First of all, in the present information recording and reproducing apparatus SP, in response to a signal indicating that the disk DK1 has been loaded therein, the CPU 14 controls both of the laser power controller 15 and the servo controller 17. Through those controls, the initialization is carried out such that the laser power of the optical beam B and various gains (e.g., corresponding to a corrected position for a spherical aberration) are set to those values previously defined in a single layer mode (for the monolayer type of disk) (step S10).

After this, under the control of the CPU 14, the servo controller 17 drives the actuator 19 such that an optical beam B radiated from the pickup 11 is focused onto the lead-in area LA of the disk DK1 that has now been loaded (step S11).

Since the only one information recording layer L1 is provided with the reflection layer in the lead-in area LA (refer to Fig. 4A), the focus error signal, which can be collected by radiating the optical beam B to each information recording layer, shows the largest level when the beam is radiated toward the information recording layer L1 to be focused. That is, in the lead-in area LA, the optical beam B passes the information recording layers L2 and L4 without encountering any reflection layer until reaching the first information layer L1. The focus error signal detected at the information recording layers L2 to L4 becomes smaller than that at the first information recording layer L1.

The optical pickup 11 reads out information from the lead-in area LA on the information recording layer L1 on which the optical beam B is focused, and gives a corresponding electrical signal indicative of the read information to the CPU 14 (step S12). The read-out information includes the number of information recording layers in the disk (i.e., the number of layers), the type of a media, a strategy pattern, an optimum laser power, and information in relation to copyright.

The CPU 14 then uses the read-out information to determine if or not the loaded disk is a multilayer type of disk (step S13).

If it is determined at step S13 that the disk loaded at present is not a multilayer type (NO at step S 13), the disk is a monolayer type. In such a case, the recording or reproducing operation should be executed under the initial mode set at step S10. Hence, without switching the setting modes, the optical pickup 11 is allowed to perform, under the control of the CPU 11, a search operation in the user data area DA to start reading or reproducing information to be desired therein (step S15).

On the other hand, the determination at step S 13 shows that the disk loaded at present is a multilayer type (YES at step S13), the CPU 14 performs control directed to the multilayer type of disk DK1. Namely, the CPU 14 sends commands to both the laser power controller 15 and the servo controller 17 to realize an optimum laser power to the optical beam B and a servo gain, which are appropriate for the recording or reproducing operation in or from the multilayer type of disk (step S14).

Then, the optical pickup 11 is allowed to perform, under the control of the CPU 11, a search operation in the user data area DA to start reading or reproducing information to be desired therein (step S15).

As described above, when the optical disk DK1 according to the present embodiment is loaded, the reflection layer exists in the only one information recording layer L1 in the lead-in area LA. It is therefore possible that the focus error signal, which is acquired when optical beam is radiated to each of the information recording layers, shows the largest level when the beam is radiated onto the only one information recording medium L1. In other words, the error focus signals detected from the remaining information recording layers L2 to L4 in the lead-in area LA becomes smaller compared to that detected from the layer L1, because there is no reflection layer in each of the layers L2 to L4. Accordingly, the optical beam B can reach an information recording layer to be targeted in a steady manner without erroneous detection.

Further, in the present embodiment, a time required for the optical pickup 11 to initialize the operation parameters can be shortened, because a time of period conventionally required for allowing the beam to reach an information recording layer to be targeted is omitted, in the case that the targeted information recording disk is far from the incidence surface.

In this way, the lead-in area is provided with only one information recording layer having a reflection layer. Thus the information recording and reproducing apparatus enables necessary information to be detected from an information recording layer to be targeted, because an optical beam can reach the targeted information recording layer in a quick manner without fail.

Further, in this information recording and reproducing apparatus, the initialization is first set for the monolayer type of disk, and then the type of a disk is determined. When being found that the disk that has been loaded is a monolayer type, the information-recording or -reproducing operation is started without changing the initialized parameters. In contrast, when it is found that the loaded disk is a multilayer type, the initialization for the multilayer type of disk is performed again. The multilayer type of disk is then subjected to recording or reproducing information. In addition, in the lead-in area LA of the optical disk DK, the distance from the beam incidence-side surface to the information recording layer L1 provided with the reflection layer is made to equal that of the monolayer type of optical disk in which only one information recording layer is provided. Thus, independently of the fact that a disk to be reproduced is a monolayer type or a multilayer type, information can be read out quickly from the lead-in area, without performing troublesome operations to change the parameters depending on the type of a disk.

### (Second embodiment)

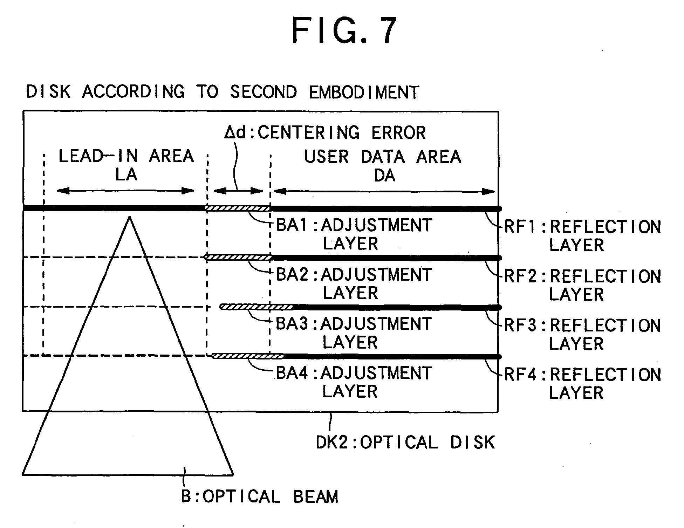

Referring to Fig. 7, an optical disk according to a second embodiment of the present invention will now be described.

Fig. 7 shows a section of an optical disk employed by the second embodiment. This optical disk is identical to that described in the foregoing first embodiment except in that the optical disk is provided with adjustment layers BA serving as a dummy region between the lead-in area LA and the user data area DA. The adjustment layers BA are level individually with the information recording layers L located in the user data area DA. Also an information recording and reproducing apparatus according to the present embodiment, which records or reproduces information in or from the optical disk shown in Fig. 7, is similar to that described in the first embodiment, so that the explanation will be omitted.

As shown in Fig. 7, the optical disk DK2 is provided with adjustment layers BA1 to BA4 formed as part of the individual information recording layers and located between the lead-in area LA and the user data area DA, the adjustment layers BA1 to BA4 being formed as being a region having a predetermined length. Thus, the adjustment layers BA1 to BA4 are the same in their reflection rates and transmission rates as those in the reflection layers in the user data area DA that is next to the adjustment layers.

In cases where a multilayer type of disk is produced, there is a certain amount of centering error (Δd) at each layer. Therefore there are some cases where the beginning ends of the reflection layers in the information recording layers are positioned irregularly in the user data area. In order to avoid a drawback attributable to such irregularities, the adjustment layers of which radial lengths are larger than a predetermined centering error (Δd) are formed in an innermost circumferential portion of the user data area DA. As described above, the reflection rate and transmission rate of each of he adjustment layers are the same as those of each reflection layer in the user data area DA.

Arrangement of the adjustment layers causes both of face power on each layer and an amount of reflected light from each layer to be even over the layers, thus preventing inconveniences which may occur in the disk innermost circumferential portion.

It is assumed that the centering error is about 70 µm in the case of the next-generation high-density DVD, it is preferred that the radial length of the adjustment layers is for example 100 µm or more.

In the above embodiments, the explanation has been given to the optical disk provided with four information recording layers to form a multilayer type of disk, but this is not a definitive list. The foregoing layer structure in the lead-in area is applicable to an optical disk, as long as two or more information recording layers are provided therein. By way of example, an optical disk with five information recording layers can also be provided, in which, in the lead-in area thereof, the reflection layer is formed in only the fifth information recording layer counted from the beam-incidence side. That is, provided that the reflection layer is provided by one in the lead-in area, the similar advantages to the above can be provided as well.

The advantage of shortening the time necessary for the focus servo control operation becomes noticeable, as the number of layers of an optical disk is increased.

Further, concerning an optical disk according to the present invention, the distance from the beam incidence-side surface to an information recording layer provided with a reflection layer therein in the lead-in area will not of course limited to an amount of 100 µm.

Still further, it is also possible to employ the configuration in which the optical beam is radiated to the multilayer type of optical disk from its substrate side, in place of having the optical beam radiated to the disk from its cover layer side for reading information.

Still, although the foregoing embodiments have been explained about recording or reproducing information into or from recorded in an optical disk, the present invention can also be reduced into practice to other recording mediums, such as tape-like recording medium, so long as an optical beam is used for the recording or reproduction.

For the sake of completeness, it should be mentioned that the various embodiments and modifications explained so far are not definitive lists of possible embodiments. The expert will appreciates that it is possible to combine the various construction details or to supplement or modify them by measures known from the prior art without departing from the basic inventive principle.

## Claims

1. A multilayer type of information recording medium (DK1, DK2), **characterized in that** the medium comprising:
a plurality of information recording layers (L1 to L4) into each of which information is recordable; and
a single corresponding-information recording layer (L1) into which information corresponding to the information recorded in the information recording layers is recordable.

2. The multilayer type of information recording medium according to claim 1, **characterized in that** the corresponding information is control information for controlling either recording or reproduction of the information into and from each of the information recording layers.

3. The multilayer type of information recording medium according to either claim 1 or 2, **characterized in that** the corresponding-information recording layer is provided with a reflection layer (RF1) to reflect an optical beam (B) radiated to optically read the corresponding information.

4. The multilayer type of information recording medium according to claim 3, **characterized in that** a distance from a beam-incidence-side surface of the medium to the corresponding-information recording layer is the same as a distance from a beam-incidence-side surface of a monolayer type of information recording medium provided with a single information recording layer for recording the information to the single information recording layer.

5. The multilayer type of information recording medium according to claim 4, **characterized in that** the distance from the beam-incidence-side surface of the medium to the corresponding-information recording layer is 100 µm.

6. The multilayer type of information recording medium according to any one of claims 3 to 5, **characterized in that** the medium further comprising:
a plurality of adjustment layers (BA1 to BA4) located between the single corresponding-information recording layer and the plurality of information recording layers and located continuously to the plurality of information recording layers, respectively, with the same level between each adjustment layer and the information recording layer kept.

7. An information recording and reproducing apparatus (SP) for selectively recording or reproducing information into or from an information recording layer consisting of either a signal information recording layer of a monolayer type of information recording medium or one of a plurality of information recording layers (L1 to L4) of a multilayer type of information recording medium (DK1, DK2), **characterized in that** the apparatus comprising:
a first setting device (14) configured to initialize operating parameters to be appropriate for either the recording or reproduction of the information into or from the information recording layer of the monolayer type of information recording medium;
a determination device (14) configured to determine whether or not an information recording medium loaded currently in the information recording and reproducing apparatus is the monolayer type of information recording medium or the multilayer type of information recording medium, the determination being carried out after the initialization of the operating parameters;
a first recording/ reproducing device (11) configured to start recording or reproducing the information into or from the information recording layer of the monolayer type of information recording medium on the basis of the initialized operating parameters, when the determination device determines that the currently loaded information recording medium is the monolayer type of information recording medium;
a second setting device (14) configured to change the operating parameters to be appropriate for either the recording or reproduction of the information into or from the information recording layer of the multilayer type of information recording medium, when the determination device determines that the currently loaded information recording medium is the multilayer type of information recording medium; and
a second recording/reproducing device (11) configured to start recording or reproducing the information into or from the information recording layer of the multilayer type of information recording medium on the basis of the changed operating parameters.

8. The information recording and reproducing apparatus according to claim 7, **characterized in that** the multilayer type of information recording medium comprises a single corresponding-information recording layer (L1) into which information corresponding to the information recorded in the information recording layers is recordable.

9. The information recording and reproducing apparatus according to claim 8, **characterized in that** the corresponding-information recording layer is provided with a reflection layer (RF1) to reflect an optical beam (B) radiated to optically read the corresponding information.

10. The information recording and reproducing apparatus according to claim 9, **characterized in that** a distance from a beam-incidence-side surface of the medium to the corresponding-information recording layer is the same as a distance from a beam-incidence-side surface of a monolayer type of information recording medium provided with a single information recording layer for recording the information to the single information recording layer.

11. The information recording and reproducing apparatus according to 10, **characterized in that** the distance from the beam-incidence-side surface of the medium to the corresponding-information recording layer is 100 µm.

12. The information recording and reproducing apparatus according to claim 9, **characterized in that** the multilayer type of information recording medium further comprises a plurality of adjustment layers (BA1 to BA4) located between the single corresponding-information recording layer and the plurality of information recording layers and located continuously to the plurality of information recording layers, respectively, with the same level between each adjustment layer and the information recording layer kept.

13. An information recording and reproducing method for selectively recording or reproducing information into or from an information recording layer consisting of either a signal information recording layer of a monolayer type of information recording medium or one of a plurality of information recording layers (L1 to L4) of a multilayer type of information recording medium (DK1, DK2), **characterized in that** the method comprising the steps of:
initializing operating parameters to be appropriate for either the recording or reproduction of the information into or from the information recording layer of the monolayer type of information recording medium;
determining whether or not an information recording medium loaded currently is the monolayer type of information recording medium or the multilayer type of information recording medium, the determination being carried out after the initialization of the operating parameters;
first starting recording or reproducing the information into or from the information recording layer of the monolayer type of information recording medium on the basis of the initialized operating parameters, when it is determined that the currently loaded information recording medium is the monolayer type of information recording medium;
changing the operating parameters to be appropriate for either the recording or reproduction of the information into or from the information recording layer of the multilayer type of information recording medium, when it is determined that the currently loaded information recording medium is the multilayer type of information recording medium; and
second starting recording or reproducing the information into or from the information recording layer of the multilayer type of information recording medium on the basis of the changed operating parameters.

14. A program enabling a computer to function for selectively recording or reproducing information into or from an information recording layer consisting of either a signal information recording layer of a monolayer type of information recording medium or one of a plurality of information recording layers (L1 to L4) of a multilayer type of information recording medium (DK1, DK2), **characterized in that** the computer providing the functions of:
initializing operating parameters to be appropriate for either the recording or reproduction of the information into or from the information recording layer of the monolayer type of information recording medium;
determining whether or not an information recording medium loaded currently is the monolayer type of information recording medium or the multilayer type of information recording medium, the determination being carried out after the initialization of the operating parameters;
first starting recording or reproducing the information into or from the information recording layer of the monolayer type of information recording medium on the basis of the initialized operating parameters, when it is determined that the currently loaded information recording medium is the monolayer type of information recording medium;
changing the operating parameters to be appropriate for either the recording or reproduction of the information into or from the information recording layer of the multilayer type of information recording medium, when it is determined that the currently loaded information recording medium is the multilayer type of information recording medium; and
second starting recording or reproducing the information into or from the information recording layer of the multilayer type of information recording medium on the basis of the changed operating parameters.
